Europäisches Patentamt

European Patent Office

Office européen des brevets

(19)

(11) Veröffentlichungsnummer: **0 314 787**
A1

# (12) EUROPÄISCHE PATENTANMELDUNG

Veröffentlicht nach Art. 158 Abs. 3 EPÜ

(21) Anmeldenummer: 87902874.4

(22) Anmeldetag: 24.03.87

Daten der zugrundeliegenden internationalen Anmeldung:

(86) Internationale Anmeldenummer:
PCT/SU87/00035

(87) Internationale Veröffentlichungsnummer:
WO88/07783 (06.10.88 88/22)

(51) Int. Cl.³: **H 02 K 29/06**

(43) Veröffentlichungstag der Anmeldung:
**10.05.89 Patentblatt 89/19**

(84) Benannte Vertragsstaaten:
**CH DE FR GB IT LI SE**

(71) Anmelder: **RADIK, Tynu Arvovich**
**ul. Karu, 13-18**
**Tallin, 200010(SU)**

(71) Anmelder: **SJUGIS, Anatol Jurievich**
**ul. Toome, 65**
**Tallin, 200009(SU)**

(71) Anmelder: **PUNGAS, Toom Ainovich**
**bulvar Sypruse, 219-3**
**Tallin, 200034(SU)**

(71) Anmelder: **KORSEN, Vilie Kaarelovich**
**ul. Ranniku, 48b-10**
**Tallin, 200021(SU)**

(72) Erfinder: **RADIK, Tynu Arvovich**
**ul. Karu, 13-18**
**Tallin, 200010(SU)**

(72) Erfinder: **SJUGIS, Anatol Jurievich**
**ul. Toome, 65**
**Tallin, 200009(SU)**

(72) Erfinder: **PUNGAS, Toom Ainovich**
**bulvar Sypruse, 219-3**
**Tallin, 200034(SU)**

(72) Erfinder: **KORSEN, Vilie Kaarelovich**
**ul. Ranniku, 48b-10**
**Tallin, 200021(SU)**

(74) Vertreter: **Patentanwälte Beetz sen. - Beetz jun. Timpe -**
**Siegfried - Schmitt-Fumian- Mayr**
**Steinsdorfstrasse 10**
**D-8000 München 22(DE)**

(54) ZWEIPHASENGLEICHRICHTERMOTOR.

(57) Der zweiphasige Stromrichtermotor enthält einen Stator (1) mit Leistungswicklungen (2,3) mit unterschiedlichen Phasenlagen, einen Rotor (6) als Dauermagnet mit an der aktiven Oberfläche angebrachten Polen (7), die den Leistungswicklungen (2,3) und den magnetoempfindlichen Lagegebern (4,5) des Rotors (6), die in unmittelbarer Nähe der Leistungswicklungen (2,3) angeordnet sind und deren Ausgänge mit den invertierenden Eingängen (10,11) und den nichtinvertierenden Eingängen (12,13) der Operationsverstärker (8,9) in Verbindung stehen. Die Ausgänge (14,15) der letzteren sind mit Mitteln (20,21) zur Kompensation von durch die Leistungswicklungen (3,2) unterschiedlicher Phasen hervorgerufenen elektromagnetischen Störungen, die in den magnetoempfindlichen Lagegebern (4,5) des Rotors (6) entstehen, elektrisch verbunden, welche ihrerseits mit den Eingängen (10,13) der jeweiligen Operationsverstärker in elektrischer Verbindung stehen.

./...

Croydon Printing Company Ltd.

EP 0 314 787 A1

FIG. 1

# ZWEIPHASIGER STROMRICHTERMOTOR

## Gebiet der Technik

Die vorliegende Erfindung betrifft elektrische Motoren und bezieht sich insbesondere auf zweiphasige Stromrichtermotoren.

## Vorangehender Stand der Technik

Bekannt ist ein zweiphasiger Stromrichtermotor, der einen Stator mit Leistungswicklungen, magnetoempfindliche Rotorlagegeber, die in unmittelbarer Nähe der Leistungswicklungen angeordnet sind, und Transistoren enthält, an deren Basiselektroden die Ausgänge der magnetoempfindlichen Rorotlagegeber und an deren Kollektoren die ersten Wicklungsenden der Leistungswicklungen angeschlossen sind, deren zweite Enden mit einer gemeinsamen Sammelleitung in elektrischer Verbindung stehen (US,A, 3767986).

Bei dem genannten Elektromotor wird das Ausgangssignal des magnetoempfindlichen Elementes jedes Rotorlagegebers vom Transistor verstärkt, was keine ausreichende Stabilität des Übertragungsfaktors für das vom magnetoempfindlichen Element des Rotorlagegebers zur Leistungswicklung übertragene Signal sichert.

Der Übertragungsfaktor des vom magnetoempfindlichen Element des Rotorlagegebers zur Leistungswicklung übertragenen Signals ist stabil genug bei einem weiteren bekannten zweiphasigen Stromrichtermotor, der einen Stator mit Leistungswicklungen unterschiedlicher Phasen, magnetoempfindliche Rotorlagegeber, die in unmittelbarer Nähe der Leistungswicklungen angeordnet sind, einen Rotor, der als Dauermagnet mit an der aktiven Oberfläche ausgeführten Polen ausgebildet ist, die den Leistungswicklungen und den magnetoempfindlichen Rotorlagegebern zugewandt sind, sowie einen ersten und einen zweiten Operationsverstärker mit invertierenden und nichtinvertierenden Eingängen enthält, an welche die Ausgänge der magnetoempfindlichen Geber angeschlossen sind, wobei die Ausgänge der Operationsverstärker mit den ersten Wicklungsenden der Leistungswicklungen verbunden sind, deren zweite Wicklungsenden mit der gemeinsamen Sammelleitung (DE,A, 2601981) in elektrischer Verbindung stehen.

- 2 -

Bei solch einer konstruktiven Ausführung des obenbe-handelten Elektromotors treten in jedem magnetoempfindli-chen Rotorlagegeber elektromagnetische Störungen auf, die durch die Leistungswicklung benachbarter Phase hervorgerufen werden. Daraus ergeben sich wiederum Schwankungen der Drehmomentgröße des Elektromotors.

#### Offenbarung der Erfindung

Der Erfindung wurde die Aufgabe zugrundegelegt, einen zweiphasigen Stromrichtermotor zu entwickeln, in dem ein solches Mittel zur gegenseitigen Kopplung zwischen Leistungswicklungen mit unterschiedlichen Phasenlagen vorgesehen ist, das die Möglichkeit bietet, elektromagnetische Störungen, die im magnetoempfindlichen Rotorlagegeber durch die Leistungswicklung benachbarter Phase entstehen, zu kompensieren und damit Schwankungen des Drehmomentes im Elektromotor zu verringern.

#### Lösung des technischen Problems

Dies wird dadurch erreicht, daß im zweiphasigen Strom-richtermotor, enthaltend einen Stator mit Leistungswick-lungen mit unterschiedlichen Phasenlagen, magnetoempfind-liche, in unmittelbarer Nähe der Leistungswicklungen angeordnete Rotorlagegeber, einen Rotor als Dauermagnet mit an der aktiven Oberfläche ausgeführten Polen, die den Leistungswicklungen und den magnetoempfindlichen Rotorlagegebern zugewandt sind, und einen ersten und einen zweiten Operationsverstärker mit invertierenden und nichtinvertierenden Eingängen, an die die Ausgänge der magnetoempfindlichen Geber angeschlossen sind, und mit Ausgängen, die mit den ersten Wicklungsenden der Leistungswicklungen verbunden sind, deren zweite Wicklungsenden mit der gemeinsamen Sammelleitung in elektrischer Verbindung stehen, erfindungsgemäß für jeden- den ersten und den zweiten- Operationsverstärker ein Mittel zur Kompensation von durch die Leistungs-wicklung benachbarter Phase hervorgerufenen elektromagne-tischen Störungen, die im magnetoempfindlichen Rotorlage-geber auftreten, vorgesehen ist, welches Mittel mit einem der Eingänge des ersten und des zweiten Operationsverstärkers und mit dem Ausgang des zweiten und des ersten Operationsverstärkers elektrisch verbunden ist.

Es ist vorteilhaft, daß für jeden- den ersten und den zweiten- Operationsverstärker das Mittel zur Kompensation von durch die Leistungswicklung benachbarter Phase hervorgerufenen elektromagnetischen Störungen, die im magnetoempfindlichen Rotorlagegeber entstehen, einen Hauptwiderstand enthält, dessen erstes Anschlußende beim ersten Operationsverstärker an seinen invertierenden Eingang und beim zweiten Operationsverstärker an seinen nichtinvertierenden Eingang geschaltet ist und dessen zweites Anschlußende mit dem Ausgang des zweiten Operationsverstärkers für den ersten Operationsverstärker und mit dem Ausgang des ersten Operationsverstärkers für den zweiten Operationsverstärker in elektrischer Verbindung steht.

Es ist auch von Vorteil, daß das zweite Anschlußende des Hauptwiderstandes unmittelbar an den Ausgang des zweiten Operationsverstärkers für den ersten Operationsverstärker und an den Ausgang des ersten Operationsverstärkers für den zweiten Operationsverstärker angeschlossen ist.

Es ist zweckdienlich, daß für jeden- den ersten und den zweiten -Operationsverstärker das Mittel zur Kompensation von durch die Leistungswicklung benachbarter Phase hervorgerufenen elektromagnetischen Störungen, die im magnetoempfindlichen Rotorlagegeber entstehen, einen zusätzlichen Widerstand enthält, dessen erstes Anschlußende mit dem zweiten Wicklungsende der Leistungswicklung und dessen zweites Anschlußende mit der gemeinsamen Sammelleitung verbunden ist, wobei das zweite Anschlußende des Hauptwiderstandes beim ersten Operationsverstärker an den Ausgang des zweiten Operationsverstärkers und beim zweiten Operationsverstärker an den Ausgang des ersten Operationsverstärkers durch Anschluß an den Verbindungspunktes des zweiten Wicklungsendes der Leistungswicklung und des ersten Anschlußendes des zusätzlichen Widerstandes geschaltet ist.

Solch eine konstruktive Ausführung des zweiphasigen Stromrichtermotors gestattet erfindungsgemäß es, Schwankungen der Drehmomentgröße durch Herabsetzung von durch die Leistungswicklung benachbarter Phase im magnetoempfind-

lichen Rotorlagegeber induzierten Störungen zu verringern.

### Kurzbeschreibung der Erfindung

Im folgenden wird die Erfindung anhand von konkreten Ausführungsbeispielen unter Bezugnahme auf die beigelegten Zeichnungen näher erläutert. Es zeigen:

Fig. 1 ein elektrisches Prinzipschaltbild eines erfindungsgemäßen zweiphasigen Stromrichtermotors;

Fig. 2 eine andere Ausführungsform des elektrischen Prinzipschaltbildes des erfindungsgemäßen zweiphasigen Stromrichtermotors.

### Beste Ausführungsvarianten der Erfindung

Der erfindungsgemäße Stromrichtermotor enthält erfindungsgemäß einen Stator I (Fig. I) mit Leistungswicklungen 2 und 3, die unterschiedliche Phasenlagen haben, sowie magnetoempfindliche Rotorlagegeber 4 und 5, welche in unmittelbarer Nähe der Leistungswicklungen 3 bzw. 2 angeordnet sind, einen Rotor 6, der als Dauermagneten mit an der aktiven Oberfläche angebrachten Polen 7 (N und S) ausgebildet ist, die den Leistungswicklungen 2 und 3 und den magnetoempfindlichen Lagegeber 4 und 5 des Rotors 6 zugewandt sind, und Maßstab-Operationsverstärker 8 und 9 mit invertierenden Eingängen 10 bzw. 11 und nichtinvertierenden Eingängen 12 bzw. 13.

An die Eingänge 10 und 12 sind die Ausgänge des magnetoempfindlichen Rotorlagegebers 4 geschaltet. An die Eingänge II und I3 sind die Ausgänge des magnetoempfindlichen Rotorlagegebers 5 angeschlossen.

Die Ausgänge 14 und 15 der Maßstab-Operationsverstärker 8 und 9 sind mit den einen Enden 16 und 17 der Leistungswicklung 2 bzw.3 verbunden. Die anderen Enden 18 und 19 der Wicklungen 2 und 3 sind mit einer gemeinsamen Sammelleitung verbunden, die in der Zeichnung schematisch gezeigt ist.

Der erfindungsgemäße zweiphasige Stromrichtermotor enthält für jeden Maßstab-Operationsverstärker 8 und 9 ein Mittel 20 bzw. 21 zur Kompensation von durch die Leistungswicklung 3 bzw. 2 benachbarter Phase bedingten elektromagnetischen Störungen, die im magnetoempfindlichen Lagegeber 4 bzw. 5 des Rotors 6 entstehen, welches Mittel je-

weils mit einem der Eingänge 10 und 13 des Maßstab-Operationsverstärkers 8 bzw. 9 und mit dem Ausgang 15 bzw. 14 des Maßstab-Operationsverstärkers 9 bzw. 8 elektrisch verbunden ist.

In der zu behandelnden Ausführungsform des erfindungsgemäßen zweiphasigen Stromrichtermotors enthält das Mittel 20 einen Widerstand 22, während das Mittel 21 mit einem Widerstand 23 versehen ist. Das eine Anschlußende des Widerstandes 22 ist mit dem invertierenden Eingang 10 des Maßstab-Operationsverstärkers 8 und das andere Anschlußende unmittelbar mit dem Ausgang des Maßstab-Operationsverstärkers 9 verbunden. Das eine Anschlußende des Widerstandes 23 ist mit dem nichtinvertierenden Eingang 13 des Maßstab-Operationsverstärkers 9 und das andere Anschlußende unmittelbar mit dem Ausgang 14 des Maßstab-Operationsverstärkers 8 verbunden.

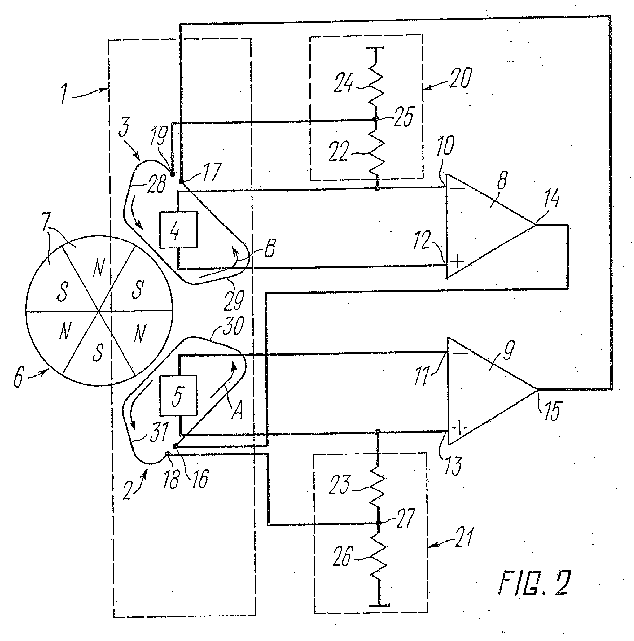

Bei einer anderen Ausführungsform des erfindungsgemäßen zweiphasigen Stromrichtermotors ist dem Mittel 20 (Fig.2) ein zusätzlicher Widerstand 24 zugeordnet, dessen eines Anschlußende mit der Wicklungsende 19 der Wicklung 3 und dessen anderes Anschlußende mit der gemeinsamen Sammelschiene in Verbindung steht.

In diesem Fall ist das eine Anschlußende des Widerstandes 22 mit dem invertierenden Eingang des Maßstab-Operationsverstärkers 8 und dessen anderes Anschlußende mit einem Verbindungspunkt 25 verbunden, in dem das Ende 19 der Wicklung 3 mit dem Anschlußende 24 in Verbindung steht.

Dem Mittel 21 ist ein zusätzlicher Widerstand 26 zugeordnet, dessen eines Anschlußende an das Wicklungsende 18 der Wicklung 2 angeschlossen ist und dessen anderes Anschlußende an der gemeinsamen Sammelleitung liegt. Hierbei liegt das eine Anschlußende des Widerstandes 23 am nichtinvertierenden Eingang 13 des Maßstab-Operationsverstärkers 9 und das andere Anschlußende an einem Verbindungspunkt 27, in dem das Ende 18 der Wicklung 2 mit dem Anschlußende des Widerstandes 26 verbunden ist.

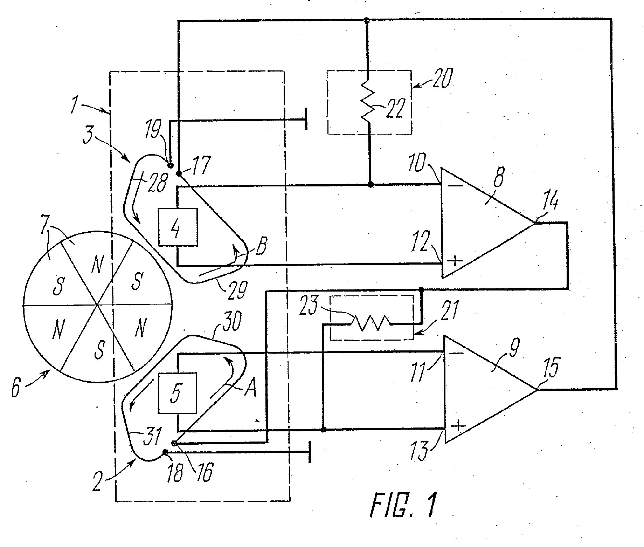

Bei dem erfindungsgemäßen zweiphasigen Stromrichtermotor ist es zur Konstanthaltung der Winkelgeschwindigkeit zweckmäßig, daß die durch die Leistungswicklungen 2 (Fig. 1 und 2) und 3 fließenden Ströme um ± 90° el zeitlich verschoben sind, womit eine räumliche Versetzung der Wicklungen um (m . 360 ± 90) / n geometrische Winkelgrade in Übereinstimmung steht, wobei m eine beliebige ganze Zahl und n eine Polpaarzahl bedeuten.

Die Anordnung der Pole 7 (N und S) am Rotor 6 und die Unterbringung der Wicklungen 2 und 3 im Stator 1 entspricht m = 1 und n=3. Eine solche Anordnung ist dadurch bevorzugt, daß die magnetoempfindlichen Geber 4 und 5 innerhalb der Leistungswicklungen 3 und 2 liegen. Jedes der der aktiven Oberfläche des Rotors 6 gegenüberliegenden Elemente ist gegenüber dem vorhergehenden um 30° in nachstehender Folge (gesehen im Uhrzeigersinn in der Zeichnungsebene) - erster Arbeitsteil 28 der Leistungswicklung 3, magnetoempfindlicher Geber 4, zweiter Arbeitsteil 29 der Leistungswicklung 3, erster Arbeitsteil 30 der Leistungswicklung 2, magnetoempfindlicher Geber 5, zweiter Arbeitsteil 31 der Leistungswicklung 2 - räumlich versetzt.

Die Wirkungsweise des zweiphasigen Stromrichtermotors besteht erfindungsgemäß im folgenden.

Angenommen, daß die magnetoempfindlichen Geber 4 (Fig.1) und 5 so orientiert sind, daß bei der Richtung der magnetischen Feldlinien auf die Zeichnungsebene ein positives Potential an den nichtinvertierenden Eingängen 12 und 13 der Maßstab-Operationsverstärker 8 und 9 und folglich an den Ausgängen 14 und 15 auftritt.

Es sei auch angenommen, daß sich der Rotor 6 unter der Ebene der Leistungswicklungen 2 und 3 und der magnetoempfindlichen Geber 5 und 4 befindet und einen größeren Durchmesser aufweist.

Im zu betrachtenden Zeitpunkt nehme der Rotor 6 eine in Fig. I angegebene Stellung ein. Dann befindet sich der magnetoempfindliche Geber 4 im Bereich magnetischer Feldlinien, die in die Zeichnungsebene zeigen. Somit entsteht am Ausgang 14 ein positives Potential und fließt in der Leistungswicklung 2 ein Strom entgegen dem Uhrzeiger A. Durch die Wechselwirkung mit dem magnetischen Feld der Pole 7 erfahren der Rotor 6, die Arbeitsteile 30 und 31 der Leistungswicklung 2 nach der Linkshandregel Kräfte, die nach rechts und oben in der Zeichnungsebene gerichtet sind. Da die Leistungswicklung 2 am Stator 1 befestigt ist, beginnen sich die Pole 7 des Rotors 6 in entgegengesetzter Richtung zu bewegen und der ganze Rotor 6 im Urzeigersinn umzulaufen.

Die ähnliche Behandlungsweise im Hinblick auf die andere Phase ergibt, daß der magnetoempfindliche Geber 5, indem er sich im Bereich magnetischer Feldlinien befindet, deren Richtung aus der Zeichnungsebene heraustritt, am Ausgang 15 ein negatives Potential und einen Strom in der Leistungswicklung 3 hervorruft, der ebenfalls entgegen dem Uhrzeiger B gerichtet ist. Die Arbeitsteile 28 und 29 der Leistungswicklung 3 veranlassen auch den Rotor 6, sich im Uhrzeigersinn zu drehen.

Nun soll eine durch die Leistungswicklung 3 bedingte elektromagnetische Störung betrachtet werden, die im magnetoempfindlichen Geber 4 auftritt. Aus der Stromrichtung ist zu erkennen, daß das magnetische Feld der Leistungswicklung 3 aus der Zeichnungsebene heraus gerichtet ist, d.h. das magnetische Feld des Rotors 6 und folglich das Potential am Ausgang 14 des Operationsverstärkers 8 abschwächt.

Durch den Widerstand 22, der mit dem Ausgang 15 des Operationsverstärkers 9 verbunden ist, an welchem zum gegebenen Zeitpunkt ein negatives Potential anliegt, wird das Potential des invertierenden Eingangs IO des Operationsverstärkers 8 herabgesetzt und damit das Potential am Ausgang I4 des Verstärkers 8 erhöht, so daß die Herabsetzung des Potentials, welche durch die elektromagnetische Störung der Leistungswicklung 3 bewirkt wird, kompensiert wird. Diese Herabsetzung des Potentials am invertierenden Eingang IO des Verstärkers 8 ist gerade ein Kompensationssignal (ähnliches gilt auch für den Verstärker 9).

Das magnetische Feld der Leistungswicklung 2 verstärkt im Gegenteil das magnetische Feld des Rotors 6. Zur Kompensation dieser Erscheinung wird durch das Mittel 2I ein po-

- 8 -

sitives Potential vom Ausgang 14 dem invertierenden Eingang 13 zugeführt, wodurch das Potential des Ausganges 15 erhöht wird, d.h. die elektromagnetische Störung kompensiert wird. Daraus wird klar, wozu das Kompensationssignal den ungleichnamigen Eingängen der Maßstab-Operationsverstärker 8 und 9 zugeführt ist.

Bei Umkehr der Drehrichtung des Elektromotors (z.B. durch Änderung des Vorzeichens des Übertragungsfaktors für das von den magnetoempfindlichen Gebern 4 und 5 zu den Leistungswicklungen 3 und 2 übertragene Signal) ist das Kompensationssignal in den beiden Phasen umzupolen.

Die Wirkungsweise des in Fig. 2 gezeigten zweiphasigen Stromrichtermotors ist analog der des zweiphasigen Stromrichtermotors nach Fig. 1.

Der Unterschied besteht darin, daß die Größe des Kompensationssignals nicht dem Spannungswert der Leistungswicklung 2 bzw. 3, deren elektromagnetische Störung kompensiert werden muß, sondern ihrer Stromgröße proportional ist. Da die Intensität der durch die Wicklung 2 bzw. 3 hervorgerufenen elektromagnetischen Störung gerade der Stromgröße dieser Wicklung proportional ist, ist diese Ausführungsform des Elektromotors vollkommener (es werden hierbei Einflüsse der Drehzahl und der Temperatur der Wicklungen auf die Genauigkeit der Kompensation der elektromagnetischen Störung vermieden).

Bei den Ausführungsformen des erfindungsgemäßen Elektromotors gelingt es, durch Kompensation von in jedem magnetoempfindlichen Geber durch die Wicklung benachbarter Phase hervorgerufenen elektromagnetischen Störungen Schwankungen des Drehmomentes im zu patentierenden Elektromotor, die durch die genannte Störungsart verursacht sind, um ein 5- bis 10-faches zu verringern.

Industrielle Anwendbarkeit

Zweiphasiger Stromrichtermotor kann erfindungsgemäß in Plattenspielern und Recordern, Bandlaufwerken, Antrieben für Speichereinrichtungen, besonders in Kompaktplattenspielern zur exakten Aufrechterhaltung der Drehzahl einer Kompaktplatte (eines Kompaktdisk), verwendet werden.

- 9 -

PATENTANSPRÜCHE:

1. Zweiphasiger Stromrichtermotor, enthaltend einen Stator (1) mit Leistungswicklungen (2,3) mit unterschiedlichen Phasenlagen, magnetoempfindliche, in unmittelbarer Nähe der Leistungswicklungen (2, 3) angeordnete Rotorlagegeber (4,5) des Rotors (6), einen Rotor (6) als Dauermagnet mit an der aktiven Oberfläche angebrachten Polen (7), die den Leistungswicklungen (2, 3) und den magnetoempfindlichen Rotorlagegebern (4,5) des Rotors (6) zugewandt sind, und einen ersten (8) und einen zweiten (9) Operationsverstärker mit invertierenden (10,11) und nichtinvertierenden (12, 13) Eingängen, an die die Ausgänge der magnetoempfindlichen Geber (4, 5) angeschlossen sind, und mit Ausgängen (14, 15), die mit den ersten Wicklungsenden (16,17) der Leistungswicklungen (2,3) verbunden sind, deren zweite Wicklungsenden (18, 19) mit der gemeinsamen Sammelleitung in elektrischer Verbindung stehen, dadurch gekennzeichnet, daß für jeden- den ersten (8) und den zweiten (9)-Operationsverstärker ein Mittel (20, 21) zur Kompensation von durch die Leistungswicklung (3, 2) benachbarter Phase hervorgerufenen. elektromagnetischen Störungen, die im magnetoempfindlichen Lagegeber (4,5) des Rotors (6) auftreten, vorgesehen ist, welches Mittel mit einem der Eingänge (10,13) des ersten (8) und des zweiten (9) Operationsverstärkers und mit dem Ausgang (15, 14) des zweiten (9) und des ersten (8) Operationsverstärkers elektrisch verbunden ist.

2. Zweiphasiger Stromrichtermotor nach Anspruch 1, dadurch gekennzeichnet, daß für jeden -den ersten (8) und den zweiten (9)-Operationsverstärker das Mittel (20, 21) zur Kompensation von durch die Leistungswicklung (3,2) benachbarter Phase hervorgerufenen elektromagnetischen Störungen, die im magnetoempfindlichen Lagegeber (4,5) des Rotors (6) entstehen, einen Hauptwiderstand (22, 23) enthält, dessen erstes Anschlußende beim ersten Operationsverstärker (8) an seinen invertierenden Eingang (10) und beim zweiten Operationsverstärker (9) an seinen nichtinvertierenden Eingang (13) geschaltet ist und dessen zweites Anschlußende mit dem Ausgang (15) des zweiten Operationsverstärkers (9) für den ersten Operationsverstärker (8) und mit dem Ausgang (14) des ersten Operationsverstärkers (8) für den zweiten Operationsverstärker (9) in elektrischer Verbindung steht.

3. Zweiphasiger Stromrichtermotor nach Anspruch 2, dadurch gekennzeichnet, daß das zweite Anschlußende des Hauptwiderstandes (22, 23) unmittelbar an den Ausgang (15) des zweiten Operationsverstärkers (9) für den ersten Operationsverstärker (8) und an den Ausgang (14) des ersten Operationsverstärkers (8) für den zweiten Operationsverstärker (9) angeschlossen ist.

4. Zweiphasiger Stromrichtermotor nach Anspruch 2, dadurch gekennzeichnet, daß für jeden- den ersten (8) und den zweiten (9)-Operationsverstärker das Mittel (20,21) zur Kompensation von durch die Leistungswicklung (3,2) benachbarter Phase hervorgerufenen elektromagnetischen Störungen, die im magnetoempfindlichen Lagegeber (4,5) des Rotors (6) entstehen, einen zusätzlichen Widerstand (24, 26) enthält, dessen erstes Anschlußende mit dem zweiten Wicklungsende (19,18) der Leistungswicklung (3,2) und dessen zweites Anschlußende mit der gemeinsamen Sammelleitung verbunden ist, wobei das zweite Anschlußende des Hauptwiderstandes (22, 23) an den Ausgang (15) des zweiten Operationsverstärkers (9) für den zweiten Operationsverstärker (8) und an den Ausgang (14) des ersten Operationsverstärkers (8) für den zweiten Operationsverstärker (9) durch Anschluß an einen Verbindungspunkt (25, 27), in dem das zweite Ende (19,18) der Leistungswicklung (3,2) mit dem ersten Anschlußende des zusätzlichen Widerstandes (24,26) verbunden ist, geschaltet ist.

FIG. 1

2/2.

0314787

FIG. 2

# INTERNATIONAL SEARCH REPORT

International Application No PCT/SU 87/00035

**I. CLASSIFICATION OF SUBJECT MATTER** (if several classification symbols apply, indicate all) [6]

According to International Patent Classification (IPC) or to both National Classification and IPC

$IPC^4$:    H 02 K 29/06

**II. FIELDS SEARCHED**

| Minimum Documentation Searched [7] | |
|---|---|
| Classification System | Classification Symbols |
| $IPC^4$: | H 02 K 29/00, 29/06, 29/08 |

| Documentation Searched other than Minimum Documentation to the Extent that such Documents are Included in the Fields Searched [8] |
|---|
| |

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | DE, A1, 2901676 (Papst-Motoren KG) 14 August 1980, see page 12, lines 7-36 | 1-4 |
| A | US, A, 3891904 (Nixdorf Computer AG) 24 June 1975, see fig. 4, column 5, lines 38-68, column 6, lines 1-26 | 1-4 |
| A | US, A, 4230976 (Papst-Motoren KG) 28 October 1980, see fig. 10, column 11, lines 63-68, column 12, lines 1-15 | 1-4 |
| A | US, A, 4028598 (U.S. Philips Corporation) 7 June 1977, see figs. 2,5, column 2, lines 43-68 | 1-4 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 24 November 1987 (24.11.87) | 18 December 1987 (18.12.87) |
| International Searching Authority | Signature of Authorized Officer |
| ISA/SU | |

Form PCT/ISA/210 (second sheet) (January 1985)